# FASCICULE DE BREVET EUROPEEN

(11) **EP 0 410 840 B1**
(45) Date de publication et mention de la délivrance du brevet: **24.03.1993**
(21) Numéro de dépôt: 90402004.7
(22) Date de dépôt: 12.07.1990
(51) Int. Cl.: C03B 27/044

(54) **Caissons de soufflage pour la trempe thermique de feuilles de verre dans une installation horizontale**
Blaskästen für das Tempern von Glastafeln in einer horizontalen Anlage
Blowing plenums for tempering glass sheets in a horizontal station

(30) Priorité: 24.07.1989 DE 3924402
(43) Date de publication de la demande: 30.01.1991
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Vanaschen, Luc, B-4700 Eurpen (BE); Kuster, Hans-Werner, D-5100 Aachen (DE); Diederen, Werner, D-5120 Herzogenrath (DE)
(74) Mandataire: Menes, Catherine

(56) Documents cités:
- EP-A- 0 246 123

## Description

L'invention concerne un dispositif pour la trempe thermique en position horizontale de feuilles de verre. Plus précisément l'invention a pour objet un perfectionnement à un dispositif de trempe comportant deux caissons de soufflage disposés l'un en face de l'autre, le caisson de soufflage inférieur présentant une série de lames à ajutages entre lesquelles sont placées des glissières obliques pour, le cas échéant, l'évacuation sur les côtés des débris de verre résultant de la casse d'une feuille de verre pendant la trempe.

Un dispositif du type évoqué ci-dessus est connu par exemple de la publication de brevet allemand DE-A-3612720. Dans ce dispositif connu, les surfaces obliques disposées suivant des V inversés sont formées par des profilés montés fixes entre les lames de soufflage.

En pratique, il peut arriver que malgré la disposition en V inversé des profilés, quelques débris de verre restent bloqués entre les lames de soufflage. Les éclats de verre qui se forment sont généralement de forme polygonale avec des surfaces planes ce qui ne favorisent pas leur mobilité. Ces éclats sont certes plus petits que l'espace entre deux lames, mais ils peuvent très aisément s'agglomérer pour former des ensembles plus gros qui finalement restent bloqués. A la longue les espaces intercalaires viennent à être obstrués par les éclats ce qui ne permet plus une évacuation correcte de l'air de soufflage. Cet air va alors s'évacuer uniquement selon les espaces intercalaires encore vides, formant de ce fait des courants dans des directions privilégiées, ce qui conduit à une trempe insuffisante en regard de certaines zones de la feuille de verre.

L'invention a pour but un dispositif de trempe comportant un caisson de soufflage inférieur dans lequel est entièrement écarté le risque d'une accumulation des débris de verre entre les lames à ajutages de soufflage.

La solution à ce problème ici proposée est un dispositif comportant deux caissons de soufflage disposés l'un en face de l'autre, le caisson inférieur présentant une série de lames à ajutages entre lesquelles sont placées des glissières obliques pour l'évacuation le cas échéant des débris de verre résultant de la casse d'une feuille de verre pendant la trempe, lesdites glissières obliques étant selon l'invention montées oscillantes et couplées à un vibrateur.

Alors que les glissières selon l'art devaient être disposées selon une inclinaison relativement forte, les glissières montées oscillantes selon l'invention peuvent en revanche être disposées selon un angle relativement plat sans affecter pour autant la capacité d'évacuation de tous les éclats et débris de verre. De plus, il est possible d'utiliser des profilés qui conduisent pratiquement jusqu'à la hauteur des lames à ajutages de soufflage. Pour ces raisons, l'invention permet la réalisation de caissons de soufflage globalement plus petits que ceux connus de l'art.

Les surfaces de glissement des profilés sont telles qu'elles peuvent être excitées, de préférence selon leur direction longitudinale ou transversale. Il est plus particulièrement avantageux d'employer pour leur construction des profilés en tôle du type gouttière ayant une section en forme de U.

Selon un mode de réalisation avantageux, ces gouttières débouchent sur les côtés du caisson de soufflage où elles déversent les débris par exemple dans une rigole. Pour leur mise en oscillation, les gouttières sont par exemple couplées par leur extrémité émergeant hors du caisson à un vibrateur approprié.

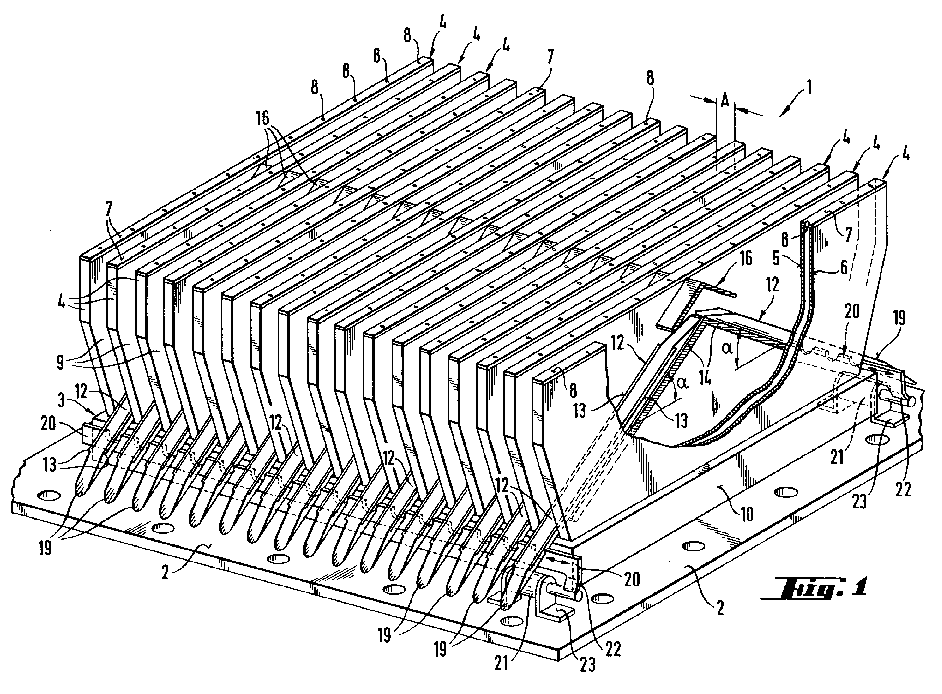

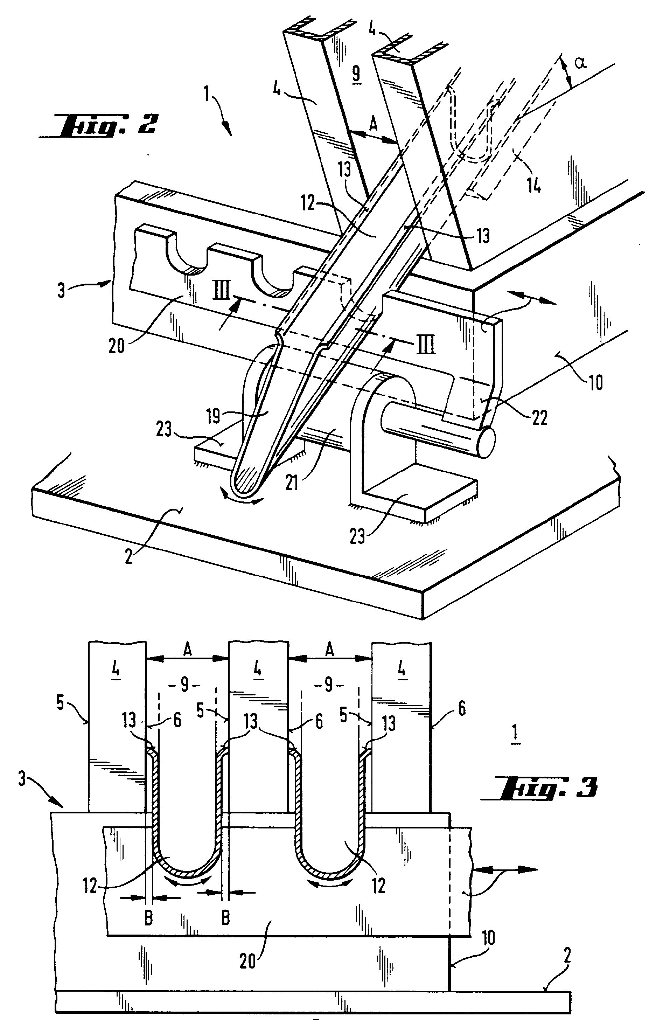

D'autres détails et caractéristiques avantageuses de l'invention ressortent de la description d'un mode de réalisation préféré de l'invention faite en référence aux dessins annexés qui représentent :
. figure 1 : un caisson de soufflage selon l'invention, vu en perspective,
. figure 2 : une vue à plus grande échelle d'un détail de la figure 1,
. figure 3 : une coupe verticale selon l'axe III-III de la figure 2.

Le caisson de soufflage 1 représenté à la figure 1 est le caisson de soufflage inférieur d'un dispositif de trempe de feuilles de verre en position horizontale. Ce caisson de soufflage 1 fait face à un caisson de soufflage supérieur d'un type identique ou analogue et ici non représenté par souci de clarté. Mais il va de soi que le caisson de soufflage supérieur n'a pas besoin d'être muni d'équipément destiné à favoriser l'évacuation des débris ou éclats de verre résultant de la casse se produisant parfois lors de la trempe.

Le caisson de soufflage 1 est muni dans sa partie inférieure d'une bride annulaire 2 servant à le raccorder au système d'amenée d'air comprimé. Le caisson 1 comprend un caisson répartiteur d'air 3 et partant de celui-ci des lames à ajutages 4 disposées à une distance A les unes des autres. Les lames 4 sont constituées par des parois latérales 5, 6, faites de plaques en métal ou fer blanc et fermées par des baguettes 7 dans lesquelles sont prévus des orifices 8 formant les ajutages de soufflage. Le gaz de soufflage échauffé par sa rencontre avec la feuille de verre chaude s'évacue hors du dispositif de trempe par les espaces 9 entre les lames 4.

Des gouttières 12 à section en forme de U, dans chacun de ces espaces 9 sont disposés avec un angle d'inclinaison α par rapport à l'horizontale. Comme on peut le voir plus particulièrement sur la figure 3, les extrémités supérieures des deux branches du U formées par la gouttière 12 sont, par exemple, repliées vers l'extérieur et débordent ainsi d'une largeur B de chaque côté de sorte que la gouttière 12 s'appuie de façon étanche sur les parois des lames 4. De cette manière la gouttière 12 n'est pas bloquée mais peut osciller de chaque côté dans l'espace de largeur B ainsi libéré, ceci sans mettre en cause le contact étanche entre leurs extrémités 13 et les parois des lames 4. Il va de soi que d'autres montages qui garantissent et l'étanchéité et la possibilité de mouvement des gouttières peuvent être utilisés.

Les gouttières 12 sont posées sur des barres 14. A leurs extrémités supérieures, les gouttières 12 se terminent très près l'une de l'autre et sont par exemple légèrement inclinées l'une vers l'autre. Au-dessus de leur point de jonction, on dispose un déflecteur 16 chapeautant les deux gouttières, ce déflecteur angulaire empêchant les débris de verre de s'accumuler au niveau de cette zone de jonction entre les deux gouttières 12.

L'extrémité inférieure 19 de chaque gouttière 12 emmerge hors du caisson sur une longueur dépendant de la construction choisie et en tout cas suffisante pour que les débris de verre soient conduits à l'endroit souhaité.

Comme on peut le voir notamment figure 2, l'extrémité inférieure 19 de chaque gouttière 12 est posée dans une encoche d'une barre d'entraînement 20. Toutes les gouttières 12 d'un même côté du caisson de soufflage sont ainsi couplées par la barre d'entraînement 20 à un vibrateur 21. Le boitier du vibrateur 21 est fixé par des brides 23 à la bride annulaire 2 ou à un cadre 10 solidaire du caisson de soufflage. Les oscillations générées par le vibrateur 21 sont transmises à la barre d'entraînement 20 par la pièce d'accouplement 22.

Le vibrateur peut être d'un type pneumatique ou électrique. L'élévation du vibrateur et la fréquence d'oscillations peuvent varier dans une large mesure. Ainsi l'élévation est par exemple de l'ordre de 0,5 à 5 mm, avec une fréquence de 10 à 200 oscillations par seconde. De bons résultats ont été par exemple obtenus avec une fréquence de 50 oscillations par seconde pour une élévation de 2 mm.

Les gouttières 12 ont de préférence une forme arrondie qui favorise l'écoulement des débris et évite qu'ils ne se coincent dans les gouttières.

## Revendications

1. Dispositif pour la trempe thermique en position horizontale de feuilles de verre comportant deux caissons de soufflage disposés l'un en face de l'autre, le caisson de soufflage inférieur (1) présentant une série de lames à ajutages (4) espacées les unes des autres, entre lesquelles sont placées des glissières obliques avec un angle d'inclinaison alpha par rapport à l'horizontale pour l'évacuation le cas échéant des débris de verre résultant de la casse d'une feuille de verre pendant la trempe, **caractérisé en ce que** les glissières obliques disposées entre les lames à ajutages sont montées oscillantes **et en ce que** les glissières sont couplées à un vibrateur.

2. Dispositif selon la revendication 1, **caractérisé en ce que** lesdites glissières obliques sont formées par des gouttières (12) à section en forme de U.

3. Dispositif selon la revendication 2, **caractérisé en ce que** les gouttières (12) débouchent sur les côtés du caisson de soufflage (1).

4. Dispositif selon l'une des revendications 2 ou 3, **caractérisé en ce que** les extrémités (19) des gouttières (12) émergeant du caisson de soufflage (1) sont couplées à un vibrateur (21).

5. Dispositif selon l'une des revendications 2 à 4, **caractérisé en ce que** les rebords (13) formant les deux branches de côté des gouttières (12) en U sont repliées vers l'extérieur, la largeur des gouttières, en décomptant les rebords, étant plus petite que la distance (A) entre deux lames (4).

6. Dispositif selon l'une ou plusieurs des revendications 1 à 5, **caractérisé en ce que** toutes les glissières disposées entre les lames à ajutages (4), notamment les gouttières en forme de U (12), sont couplées à un vibrateur (21) par une barre d'entraînement commune (20).

7. Dispositif selon l'une ou plusieurs des revendications 1 à 6, **caractérisé en ce que** dans chaque espace (9) entre deux lames à ajutages sont disposées deux gouttières placées de manière à former un ensemble en V inversé.

8. Dispositif selon la revendication 7, **caractérisé en** **ce qu'**au-dessus du point de jonction des deux gouttières est disposé un déflecteur angulaire (16).

9. Dispositif selon une ou plusieurs des revendications 4 à 8, **caractérisé en ce que** le vibrateur (21) est un générateur pneumatique d'oscillations.

10. Dispositif selon l'une ou plusieurs des revendications 4 à 8, **caractérisé en ce que** le vibrateur (21) est un générateur électrique d'oscillations.

## Patentansprüche

1. Vorrichtung zum thermischen Vorspannen von Glasscheiben in horizontaler Lage mit zwei einander gegenüber angeordneten Blaskästen, von denen der untere Blaskasten (1) eine Reihe von mit Abstand voneinander angeordneten Düsenstegen (4) aufweist, zwischen denen zum Entfernen der bei einem eventuellen Bruch einer Glasscheibe während des Vorspannen entstehenden Glasbruchstücke unter einem Neigungswinkel Alpha zur Horizontalen schräg angeordnete Gleitflächen vorgesehen sind, **dadurch gekennzeichnet**, daß die schräg zwischen den Düsenstegen (4) angeordneten Gleitflächen schwingend gelagert und an einen Vibrator angekoppelt sind.

2. Vorrichtung nach Anspruch 1, dadurch gekennzeichnet, daß die schräg angeordneten Gleitflächen durch im Querschnitt U-förmige Blechrinnen (12) gebildet werden.

3. Vorrichtung nach Anspruch 2, dadurch gekennzeichnet, daß die Blechrinnen (12) seitlich aus dem Blaskasten (1) herausgeführt sind.

4. Vorrichtung nach Anspruch 2 oder 3, dadurch gekennzeichnet, daß die aus dem Blaskasten (1) herausragenden Endabschnitte (19) der Blechrinnen (12) an einen Vibrator (21) angekoppelt sind.

5. Vorrichtung nach eienm der Ansprüche 2 bis 4, dadurch gekennzeichnet, daß die Randbereiche (13) der beiden Schenkel der U-förmigen Blechrinnen (12) jeweils nach außen umgebogen sind, und daß die äußere Breitenabmessung der Blechrinnen unterhalb der umgebogenen Randbereiche kleiner ist als der Abstand (A) zwischen zwei Düsenstegen (4).

6. Vorrichtung nach einem oder mehreren der Ansprüche 1 bis 5, dadurch gekennzeichnet, daß alle zwischen den Düsenstegen (4) angeordneten Gleitflächen, insbesondere die U-förmigen Blechrinnen (12), über eine gemeinsame Mitnehmerleiste (20) an einen Vibrator (21) angekoppelt sind.

7. Vorrichtung nach einem oder mehreren der Ansprüche 1 bis 6, dadurch gekennzeichnet, daß in jedem Zwischenraum (9) zwischen zwei Düsenstegen jeweils zwei Blechrinnen so angeordnet sind, daß sie miteinander ein umgekehrtes V bilden.

8. Vorrichtung nach Anspruch 7, dadurch gekennzeichnet, daß oberhalb der Stelle, an der die beiden Blechrinnen zusammentreffen, ein winkelförmiges Abweisblech (16) angeordnet ist.

9. Vorrichtung nach einem oder mehreren der Ansprüche 4 bis 8, dadurch gekennzeichnet, daß der Vibrator (21) ein pneumatischer Schwingungsgenerator ist.

10. Vorrichtung nach einem oder mehreren der Ansprüche 4 bis 8, dadurch gekennzeichnet, daß der Vibrator (21) ein elektrischer Schwingungsgenerator ist.

## Claims

1. Device for the thermal toughening of glass sheets in a horizontal position, comprising two blowing boxes disposed opposite each other, the lower blowing box (1) having a series of nozzle plates (4) spaced apart from one another, between which oblique slides are placed at an angle of inclination alpha relative to the horizontal for the discharge, when the case arises, of glass debris resulting from breakage of a glass sheet during toughening, characterized in that the inclined slides disposed between the nozzle plates are mounted oscillating and in that the slides are coupled to a vibrator.

2. Device according to Claim 1, characterized in that said inclined slides are formed of gutters (12) having a U-section.

3. Device according to Claim 2, characterized in that the gutters (12) lead out at the sides of the blowing box (1).

4. Device according to one of Claims 2 or 3, characterized in that the ends (19) of the gutters (12) emerging from the blowing box (1) are coupled to a vibrator (21).

5. Device according to one of Claims 2 to 4, characterized in that the flanges (13) forming the two side arms of the U-section gutters (12) are bent outwards, the width of the gutters, deducting the flanges, being smaller than the distance (A) between two plates (4).

6. Device according to one or more of Claims 1 to 5, characterized in that all the slides disposed between the nozzle plates (4), notably the U-section gutters (12), are coupled to a vibrator (21) by a common drive bar (20).

7. Device according to one or more of Claims 1 to 6, characterized in that two gutters placed together to form an inverted V are disposed in each space (9) between two nozzle plates.

8. Device according to Claim 7, characterized in that an angular deflector (16) is disposed above the junction point of the two gutters.

9. Device according to one or more of Claims 4 to 8, characterized in that the vibrator (21) is a pneumatic oscillation generator.

10. Device according to one or more of Claims 4 to 8, characterized in that the vibrator (21) is an electrical oscillation generator.
